# FASCICULE DE BREVET EUROPEEN

(11) **EP 3 868 069 B1**
(45) Date de publication et mention de la délivrance du brevet: **21.02.2024**
(21) Numéro de dépôt: 19784093.7
(22) Date de dépôt: 16.10.2019
(51) Int. Cl.: H04L 9/40

(54) **PROCÉDÉ ET DISPOSITIF DE PROTECTION DE DONNÉES SAISIES AU MOYEN D'UNE INTERFACE UTILISATEUR NON SÉCURISÉE**
VERFAHREN UND VORRICHTUNG ZUM SCHUTZ VON DATEN, DIE ÜBER EINE UNSICHERE BENUTZEROBERFLÄCHE EINGEGEBEN WURDEN
METHOD AND DEVICE FOR PROTECTING DATA ENTERED BY MEANS OF A NON-SECURE USER INTERFACE

(30) Priorité: 18.10.2018 FR 1859627
(43) Date de publication de la demande: 25.08.2021
(73) Titulaire: Banks and Acquirers International Holding, 75015 Paris (FR)
(72) Inventeur: GÉRAUD, Rémi, 26000 Valence (FR); QUENTIN, Pierre, 95880 ENGHIEN LES BAINS (FR); MAMOUDOU, Sylla, 75015 PARIS (FR)
(74) Mandataire: LLR
(86) Numéro de dépôt international: PCT/EP2019/078035
(87) Numéro de publication internationale: WO 2020/079045

(56) Documents cités:
- EP-A1- 3 007 093
- EP-A2- 2 270 713
- US-A1- 2018 121 369

## Description

### 1. Domaine de l'invention

Le domaine de l'invention est celui de la sécurisation de données sensibles saisies au moyen d'un terminal de communication dont l'intégrité n'est pas garantie en vue de leur traitement par un dispositif de traitement sécurisé.

### 2. Art antérieur et ses inconvénients

Dans le domaine des terminaux de paiement, une nouvelle génération de terminaux de paiement modulaires et riches en fonctionnalités apparait. De tels terminaux de paiement, dits intelligents, peuvent prendre la forme d'une tablette tactile acceptant différents moyens de paiement et offrant des services métier nécessaires à la gestion d'un commerce. Une telle tablette embarquant un système d'exploitation, comme par exemple le système d'exploitation *Android^{™},* il est possible d'intégrer simplement et rapidement des applications métier, telles que des applications de facturation par exemple, en plus d'applications classiques dans de tels terminaux de paiement intelligents, et d'ainsi améliorer l'expérience des commerçants.

De nombreuses données relatives à des transactions de paiement saisies au moyen d'une interface utilisateur de ces terminaux de paiement sont sensibles et il est important que cette saisie s'effectue avec un haut niveau de sécurité.

Cependant, de tels terminaux de paiement intelligents sont le plus souvent des terminaux de communications fabriqués en série ou COTS (*commercial off-the-shelf* en anglais qui signifie vendu sur l'étagère) pour lesquels le niveau de sécurité apporté aux opérations de saisies de données est faible car la fonction première de ces terminaux de communication n'est pas la saisie de données sensibles.

Le document EP 2 270 713 divulgue une technique pour renforcer la sécurité d'une technique d'authentification biométrique de sorte à éviter l'usurpation de données biométriques. Le document décrit le mélange de points caractéristiques d'une empreinte digitale de manière à obfusquer la représentation de la données biométrique.

Par conséquent, les données relatives à des transactions de paiement saisies au moyen d'une interface utilisateur de ces terminaux de paiement le sont avec un niveau de sécurité qui n'est pas en adéquation avec la sensibilité des données saisies.

Il existe donc un besoin de fournir une méthode de saisie de données depuis un équipement de communication qui offre un niveau de sécurité adapté au niveau de sensibilité des données saisies.

### 3. Exposé de l'invention

L'invention répond à ce besoin en proposant un procédé de protection de données saisies au moyen d'une interface utilisateur d'un terminal de communication selon la revendication 1.

La solution objet de l'invention permet de sécuriser les données saisies au moyen de l'interface utilisateur d'un terminal de communication, de type Smartphone par exemple, en masquant les données saisies, telles qu'un code PIN associé à une carte de paiement ou un code d'accès à une application bancaire, en les transmettant parmi un flot de données factices, et en chiffrant l'ensemble des données, les données effectivement saisies par un utilisateur et les données factices, avant leur transmission à destination d'un dispositif de traitement de données sécurisées.

Une telle solution permet de protéger les données sensibles contre plusieurs types d'attaques malveillantes. En effet, afin d'accéder aux données saisies, il faut dans un premier temps déterminer, parmi l'ensemble des données saisies, celles dont la saisie au moyen de l'interface utilisateur est une saisie effective et celles dont la saisie au moyen de l'interface utilisateur est une saisie émulée, puis dans un deuxième temps, il faut déchiffrer les données ainsi isolées.

Dans un mode de réalisation du procédé de protection, une nouvelle table de chiffrement est transmise audit module de traitement des données saisies préalablement à chaque phase de transmission de ladite pluralité de deuxièmes jeux de données.

Ainsi, dans l'éventualité où une première table de correspondance serait corrompue, la saisie de données au moyen de l'interface utilisateur du terminal de communication reste néanmoins sécurisée puisqu'une nouvelle table de correspondance est utilisée pour chiffrer les données destinées à être saisies.

Dans un mode de réalisation du procédé de protection, la phase de transmission de ladite pluralité de deuxièmes jeux de données est stoppée une fois le déchiffrement du premier jeu de données réalisé.

Ainsi, en cas d'erreur de saisie par l'utilisateur du terminal de communication, le dispositif de traitement sécurisé continue la transmission de deuxièmes jeux de données afin de masquer la nouvelle tentative de saisie du premier jeu de données par l'utilisateur.

Dans un mode de réalisation du procédé de protection, le module de traitement détermine le contenu destiné à être affiché par l'interface utilisateur en vue de la saisie de données.

Le dispositif de traitement sécurisé détermine notamment des zones de l'interface utilisateur du terminal de communication correspondant aux différents chiffres d'un pavé numérique. Dans une telle configuration, ni le système d'exploitation du terminal de communication ni l'application requérant la saisie de données au moyen de l'interface utilisateur ne contrôlent le contenu qui est affiché par l'interface utilisateur. Ainsi, une personne malveillante ayant pris le contrôle du système d'exploitation du terminal de communication ou d'une application en cours d'exécution ne pourrait pas obtenir d'information concernant le positionnement de zones correspondant par exemple à des caractères d'un clavier alphanumérique utilisé afin de saisir des données. En l'absence de telles informations, la personne malveillante se trouve alors dans l'incapacité de déterminer les données effectivement saisies au moyen de l'interface utilisateur.

Dans un mode de réalisation du procédé de protection, le module de traitement communique avec au moins un dispositif sécurisé au moyen des données du premier jeu de données.

Dans un mode de réalisation du procédé de protection, le dispositif sécurisé est une carte de paiement et les données du premier jeu de données sont un code PIN associé à ladite carte de paiement.

Dans un tel mode de réalisation, le dispositif de traitement sécurisé est par exemple un lecteur de carte de paiement sans contact sécurisé utilisant par exemple une connexion NFC afin d'échanger des données avec la carte de paiement. Les données effectivement saisies correspondent au code PIN associé à la carte de paiement et sont saisies au moyen du terminal de communication lequel a établi une session de communication sécurisée avec le dispositif de traitement sécurisé.

L'invention a également pour objet un procédé de transmission sécurisée de données saisies au moyen d'une interface utilisateur d'un terminal de communication à destination d'un dispositif de traitement sécurisé de données selon la revendication 7.

Dans un mode de réalisation du procédé de transmission sécurisée, à réception d'un message de confirmation du déchiffrement du premier jeu de données en provenance du dispositif de traitement sécurisé, celui-ci comprend une étape d'établissement d'une communication avec un avec un serveur de traitement.

L'invention concerne encore un dispositif de traitement sécurisé de données saisies au moyen d'une interface utilisateur d'un terminal de communication selon la revendication 9.

Un tel dispositif de traitement sécurisé est par exemple un lecteur de carte de paiement sans contact.

L'invention a pour autre objet un module de traitement de données saisies au moyen d'une interface utilisateur d'un terminal de communication selon la revendication 10.

Un tel module de traitement de données saisies est par exemple un module logiciel embarqué dans un terminal de communication.

Enfin, l'invention concerne un terminal de communication selon la revendication 11.

Dans un mode de réalisation particulier, le terminal de communication comprend en outre un dispositif de traitement sécurisé des données saisies au moyen de l'interface utilisateur du terminal de communication, le dispositif de traitement comprenant au moins un processeur configuré pour :
- transmettre la table de chiffrement à destination du module de traitement des données saisies,
- transmettre, au cours d'une phase durant laquelle les données du premier jeu de données sont effectivement saisies au moyen de l'interface utilisateur et à destination de l'interface utilisateur, ladite pluralité de deuxièmes jeux de données,
- déchiffrer le premier jeu de données et la pluralité de deuxièmes jeux de données transmis par le module de traitement des données saisies.

Dans un mode de réalisation particulier du terminal de communication, l'interface utilisateur est constituée d'un écran tactile.

L'invention concerne également des produits programmes d'ordinateur comprenant des instructions de code de programme pour la mise en oeuvre des procédés tels que décrits précédemment, lorsqu'ils sont exécutés par un processeur.

L'invention vise également un support d'enregistrement lisible par un ordinateur sur lequel est enregistré au moins un programme d'ordinateur comprenant des instructions de code de programme pour l'exécution des étapes d'au moins l'un des procédés selon l'invention tels que décrits ci-dessus.

Un tel support d'enregistrement peut être n'importe quelle entité ou dispositif capable de stocker le ou les programmes. Par exemple, le support peut comporter un moyen de stockage, tel qu'une ROM, par exemple un CD ROM ou une ROM de circuit microélectronique, ou encore un moyen d'enregistrement magnétique, par exemple une clé USB ou un disque dur.

D'autre part, un tel support d'enregistrement peut être un support transmissible tel qu'un signal électrique ou optique, qui peut être acheminé via un câble électrique ou optique, par radio ou par d'autres moyens, de sorte que le ou les programmes d'ordinateur qu'il contient sont exécutables à distance. Les programmes selon l'invention peuvent être en particulier téléchargés sur un réseau par exemple le réseau Internet.

Alternativement, le support d'enregistrement peut être un circuit intégré dans lequel le ou les programmes sont incorporés, le circuit étant adapté pour exécuter ou pour être utilisé dans l'exécution du ou des procédés précités.

### 4. Liste des figures

D'autres buts, caractéristiques et avantages de l'invention apparaîtront plus clairement à la lecture de la description suivante, donnée à titre de simple exemple illustratif, et non limitatif, en relation avec les figures, parmi lesquelles :
La **figure 1** représente un système dans lequel la présente invention peut être mise en oeuvre selon un premier mode de réalisation,
La **figure 2** représente les étapes mises en oeuvre lors de l'exécution des procédés de saisie sécurisée de données selon un mode de réalisation de l'invention,
La **figure 3** représente un équipement de communication selon un mode de réalisation de l'invention,
La **figure 4** représente un dispositif de traitement sécurisé de données 2 selon un mode de réalisation de l'invention.

### 5. Description détaillée de modes de réalisation de l'invention

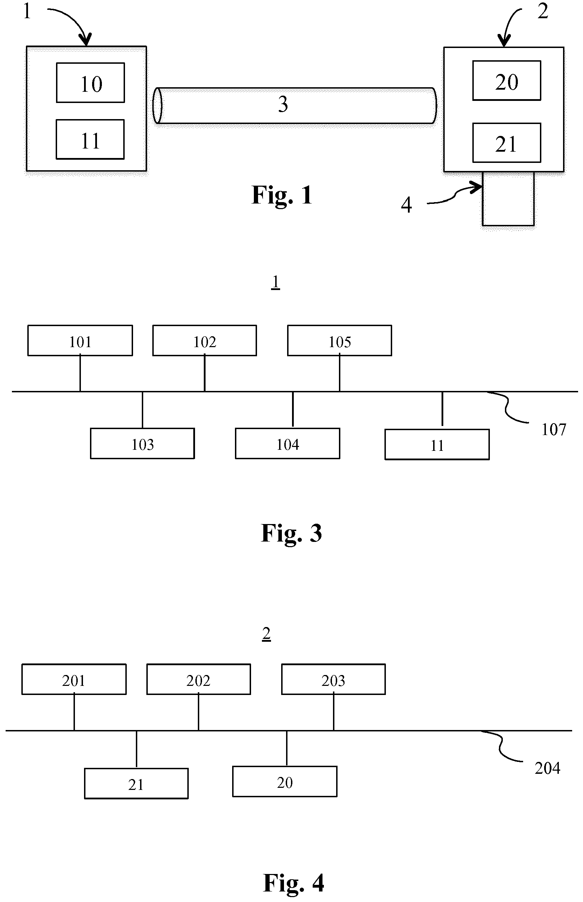

La **figure 1** représente un système dans lequel la présente invention peut être mise en oeuvre selon un premier mode de réalisation.

Un tel système comprend un terminal de communication 1, tel qu'une tablette ou un Smartphone, connecté au moyen d'une connexion sécurisée 3 à un dispositif de traitement sécurisé de données 2, tel qu'un lecteur de carte de paiement.

Le terminal de communication 1 comprend notamment une interface utilisateur 10 et un module de traitement de données saisies 11. L'interface utilisateur 10 peut être, dans un mode de réalisation de l'invention, constituée d'un clavier alphanumérique et d'un écran. Dans un autre mode de réalisation de l'invention, l'interface utilisateur 10 peut être un écran tactile.

La connexion sécurisée 3 peut être une connexion filaire établie au travers d'un câble Ethernet ou une connexion sans fil en champ proche de type Bluetooth^{®} ou NFC *(Near Field Communication* pour communication en champ proche).

Le dispositif de traitement sécurisé des données 2 comprend un module traitement sécurisé des données 20 ainsi qu'un lecteur de carte de paiement 21. Dans une première implémentation, le lecteur de carte de paiement 21 est un lecteur de carte sans contact sécurisé utilisant par exemple une connexion NFC afin d'échanger des données avec la carte de paiement 4. Lorsque la carte de paiement 4 est suffisamment proche du lecteur de carte de paiement sans contact, une connexion en champ proche sécurisée est établie entre le lecteur de carte de paiement sans contact et la carte de paiement 4

Dans une seconde implémentation, le lecteur de carte de paiement 21 est un lecteur de carte à puce dans lequel une carte de paiement 4 est insérée. Une fois la carte de paiement 4 insérée dans le lecteur de carte à puce, une connexion est établie entre la carte de paiement 4 et des têtes de lecture du lecteur de carte à puce permettant l'échange de données entre le lecteur de carte à puce et la carte de paiement 4.

Dans un deuxième mode de réalisation le module de traitement sécurisé des données 20 peut être embarqué dans le terminal de communication 1.

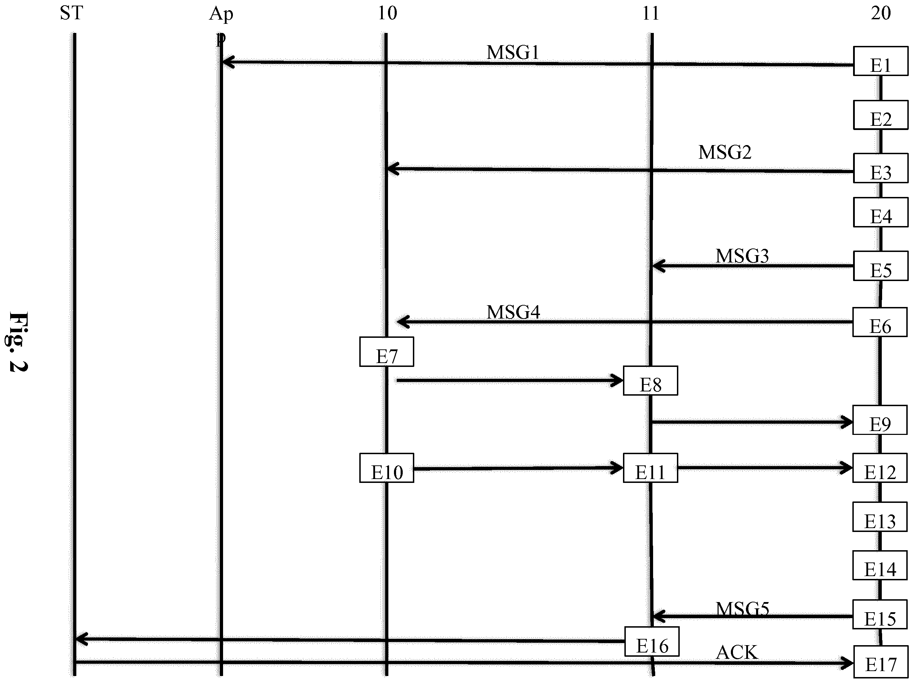

La **figure 2** représente les étapes mises en oeuvre lors de l'exécution des procédés de saisie et de transmission sécurisées de données selon un mode de réalisation de l'invention.

Par exemple, dans une étape E1, l'établissement d'une connexion entre une carte de paiement 4 et le module de lecture de carte de paiement 21 déclenche l'émission, par le module de traitement sécurisé de données 20, d'une demande d'activation MSG1 d'une application installée dans le terminal de communication 1 et nécessitant la saisie de données sensibles, telle qu'une application de paiement.

Dans une étape E2, le module de traitement sécurisé de données 20 détermine le contenu relatif à l'application en cours d'exécution et destiné à être affiché par l'interface utilisateur 10 en vue de la saisie de données. Ainsi, le module de traitement sécurisé de données 20 détermine, par exemple lorsque l'interface utilisateur est un écran tactile, la position sur l'écran tactile de zones correspondant aux chiffres d'un pavé numérique. Une zone correspondant à un même chiffre n'est jamais affichée à la même position sur l'écran tactile.

Dans une étape E3, le module de traitement sécurisé 20 émet à destination de l'interface utilisateur 10 un message MSG2 comprenant des instructions relatives au contenu à afficher déterminé au cours de l'étape E2.

Dans une étape E4, le module de traitement sécurisé 20 génère une table de chiffrement TC destinée à être utilisée par le module de traitement de données saisies 11 pour chiffrer les données saisies au moyens de l'interface utilisateur 10.

Dans une étape E5, le module de traitement sécurisé 20 transmet la table de chiffrement TC générée au cours de l'étape E4 à destination du module de traitement des données saisies 11 dans un message MSG3.

Au cours d'une étape E6, le module de traitement sécurisé de données 20 émet un message MSG4, à destination de l'interface utilisateur 10, comprenant un jeu de données JD1 dont la saisie est destinée à être émulée par l'interface utilisateur 10.

Dans une étape E7, l'interface utilisateur 10 émule la saisie du jeu de données JD1 et transmet le jeu de données JD1 dont la saisie a été émulée à destination du module de traitement des données saisies 11.

A réception du jeu de données JD1, le module de traitement des données saisies 11 chiffre le jeu de données JD1 au moyen de la table de chiffrement TC au cours d'une étape E8.

Le jeu de données chiffré CJD1 est ensuite transmis à destination du module de traitement sécurisé 20 au cours d'une étape E9.

Les étapes E6 à E9 sont répétées à intervalles de temps aléatoires au cours d'une phase PH1 dont la durée est variable.

Dans une étape E10, un jeu de données JD2 est effectivement saisi par un utilisateur du terminal de communication 1, au moyen de l'interface utilisateur 10. Un tel jeu de données JD2 correspond par exemple au code PIN associé à la carte de paiement 4 connectée au lecteur de carte 21. L'étape E10 intervient au cours de la phase PH1 afin que la saisie du jeu de données JD2 soit masquée parmi les saisies émulées des jeux de données JD1.

A réception du jeu de données JD2, le module de traitement des données saisies 11 chiffre le jeu de données JD2 au moyen de la table de chiffrement TC au cours d'une étape E8.

Le jeu de données chiffré CJD2 est ensuite transmis à destination du module de traitement sécurisé 20 au cours d'une étape E12.

Dans une étape E13, le module de traitement sécurisé 20 déchiffre les différents jeux de données CJD1 et CJD2 reçus.

Au cours d'une étape E14, le module de traitement sécurisé 20 identifie le jeu de données JD2 parmi l'ensemble des jeux de données déchiffrés. Cela est possible car le module de traitement sécurisé 20 a généré les jeux de données JD1 dont la saisie est destinée à être émulée par l'interface utilisateur 10. Une fois le jeu de données JD2 identifié, il est traité par le module de traitement sécurisé 20. Lorsque le jeu de données JD2 correspond au code PIN de la carte de paiement 4 ayant établi une connexion avec le module de lecture de carte de paiement 21, le dispositif de traitement de données sécurisé 20 peut accéder à des données sensibles stockées dans une mémoire de la carte de paiement 4.

Dans une étape E15, après avoir accédé au contenu de la mémoire de la carte de paiement 4, le module de traitement sécurisé 20 transmet un message MSGS à destination du module de traitement 11 comprenant des paramètres permettant l'établissement d'une session de communication avec un serveur de traitement ST, tel qu'un serveur de paiement. Les paramètres compris dans le message MSGS peuvent être chiffrés afin de garantir leur confidentialité.

Dans une étape E16, le module de traitement 11 établie une session de communication sécurisée avec le serveur de traitement ST par exemple en vue d'effectuer une opération de paiement au moyen de la carte de paiement 4.

Dans une étape E17, un message d'acquittement ACK peut être transmis depuis le serveur de traitement ST à destination du module de traitement sécurisé 20 et relayé par le module de traitement 11.

Dans un mode de réalisation du procédé objet de l'invention, la phase PH1 peut prendre fin une fois le jeu de données JD2 déchiffré et identifié par le module de traitement sécurisé de données 20.

Dans un autre mode de réalisation de l'invention, la phase PH1 a une durée déterminée. Si à l'expiration de cette durée, le jeu de données JD2 n'a pas été effectivement saisi au moyen de l'interface utilisateur 10, un message d'erreur peut être affiché au moyen de l'interface graphique 10 invitant l'utilisateur du terminal de communication à connecter de nouveau la carte de paiement 4 avec le module de lecture de carte 21 par exemple.

La **figure 3** représente un équipement de communication 1 selon un mode de réalisation de l'invention.

L'équipement de communication 1 peut comprendre au moins un processeur matériel 101, une unité de stockage 102, un dispositif de saisie 103, un dispositif d'affichage 104, une interface 105, au moins une interface de réseau 106 et un module de traitement de données saisies 11 qui sont connectés entre eux au travers d'un bus 107. Bien entendu, les éléments constitutifs de l'équipement de communication 1 peuvent être connectés au moyen d'une connexion autre qu'un bus.

Le processeur 101 commande les opérations de l'équipement de communication 1. L'unité de stockage 102 stocke au moins un programme pour la mise en oeuvre d'un procédé de transmission sécurisé de données selon un mode de réalisation de l'invention et, dans le cas où l'équipement de communication est embarqué dans un terminal de paiement au moins un programme relatif à l'exécution de transactions de paiement, à exécuter par le processeur 101, et diverses données, telles que des paramètres utilisés pour des calculs effectués par le processeur 101, des données intermédiaires de calculs effectués par le processeur 101, etc. Le processeur 101 peut être formé par tout matériel ou logiciel connu et approprié, ou par une combinaison de matériel et de logiciel. Par exemple, le processeur 101 peut être formé par un matériel dédié tel qu'un circuit de traitement, ou par une unité de traitement programmable telle qu'une unité centrale de traitement (*Central Processing Unit*) qui exécute un programme stocké dans une mémoire de celui-ci.

L'unité de stockage 102 peut être formée par n'importe quel moyen approprié capable de stocker le programme ou les programmes et des données d'une manière lisible par un ordinateur. Des exemples d'unité de stockage 102 comprennent des supports de stockage non transitoires lisibles par ordinateur tels que des dispositifs de mémoire à semi-conducteurs, et des supports d'enregistrement magnétiques, optiques ou magnéto-optiques chargés dans une unité de lecture et d'écriture.

Le dispositif de saisie 103 peut être formé par un clavier, un dispositif de pointage tel qu'une souris à utiliser par un utilisateur pour entrer des commandes. Le dispositif d'affichage 104 peut être également formé par un module d'affichage, tel que par exemple une interface graphique utilisateur ou GUI (pour *Graphical User Interface*). Le dispositif de saisie 103 et le dispositif d'affichage 104 constituent l'interface utilisateur 10 et peuvent être formés intégralement au moyen d'un écran tactile, par exemple.

L'interface 105 fournit une interface entre l'équipement de communication 1 et un appareil externe tel que le dispositif de traitement sécurisé de données 2. L'interface 105 peut communiquer avec l'appareil externe via une connexion filaire ou sans fil.

Au moins une interface réseau 106 fournit une connexion entre l'équipement de communication 1 et un équipement distant, telle que le serveur de traitement ST, via un réseau de communication, tel qu'Internet. L'interface réseau 106 peut fournir, en fonction de sa nature, une connexion filaire ou sans fil au réseau.

Le module de traitement des données saisies 11 est contrôlé par le processeur 101 conformément aux instructions du programme pour la mise en oeuvre d'un procédé de transmission sécurisé selon un mode de réalisation de l'invention. Le module de traitement des données saisies 11 peut être un module logiciel ou une combinaison de matériel et de logiciel.

La **figure 4** représente un dispositif de traitement sécurisé de données 2 selon un mode de réalisation de l'invention.

Le dispositif de traitement sécurisé de données 2 peut comprendre au moins un processeur matériel 201, une unité de stockage 202, un module de traitement sécurisé de données 20, un module de lecture 21 de carte de paiement 4, et une interface 203, qui sont connectés entre eux au travers d'un bus 204. Bien entendu, les éléments constitutifs du dispositif de traitement sécurisé de données 2 peuvent être connectés au moyen d'une connexion autre qu'un bus.

Le processeur 201 commande les opérations du dispositif de traitement sécurisé de données 2. L'unité de stockage 202 stocke au moins un programme pour la mise en oeuvre d'un procédé de protection de données saisies selon un mode de réalisation de l'invention et, dans le cas où le dispositif de traitement sécurisé de données 2 est embarqué dans un terminal de paiement au moins un programme relatif à l'exécution de transactions de paiement, à exécuter par le processeur 201, et diverses données, telles que des paramètres utilisés pour des calculs effectués par le processeur 201, des données intermédiaires de calculs effectués par le processeur 101, etc. Le processeur 201 peut être formé par tout matériel ou logiciel connu et approprié, ou par une combinaison de matériel et de logiciel. Par exemple, le processeur 201 peut être formé par un matériel dédié tel qu'un circuit de traitement, ou par une unité de traitement programmable telle qu'une unité centrale de traitement (*Central Processing Unit*) qui exécute un programme stocké dans une mémoire de celui-ci.

L'unité de stockage 202 peut être formée par n'importe quel moyen approprié capable de stocker le programme ou les programmes et des données d'une manière lisible par un ordinateur. Des exemples d'unité de stockage 202 comprennent des supports de stockage non transitoires lisibles par ordinateur tels que des dispositifs de mémoire à semi-conducteurs, et des supports d'enregistrement magnétiques, optiques ou magnéto-optiques chargés dans une unité de lecture et d'écriture.

L'interface 203 fournit une interface entre le dispositif de traitement sécurisé de données 2et un appareil externe tel que l'équipement de communication 1. L'interface 203 peut communiquer avec l'appareil externe via une connexion filaire ou sans fil.

Le module de traitement sécurisé des données 20 est contrôlé par le processeur 201 conformément aux instructions du programme pour la mise en oeuvre d'un procédé de protection des données saisies selon un mode de réalisation de l'invention. Le module de traitement sécurisé des données 20 peut être un module logiciel ou une combinaison de matériel et de logiciel.

## Revendications

1. Procédé de protection de données saisies au moyen d'une interface utilisateur (10) d'un terminal de communication (1) comprenant un module de traitement de données (11) saisies destiné à traiter les données saisies au moyen de l'interface utilisateur (10),
le procédé étant mis en oeuvre par un dispositif de traitement sécurisé de données (2) et comprenant :
- une étape de transmission (E5), au travers d'une une connexion sécurisée (3) établie entre le dispositif de traitement sécurisé de données (2) et le terminal de communication (1), d'une table de chiffrement (TC) à destination dudit module de traitement des données saisies, ladite table de chiffrement étant destinée à être utilisée par ledit module de traitement des données saisies pour chiffrer des données saisies au moyen de l'interface utilisateur,
- une phase de masquage (PH1) comprenant plusieurs répétitions des étapes suivantes :
o une étape de transmission (E6), à destination de l'interface utilisateur, d'un premier jeu (JD1) de données dont la saisie est destinée à être émulée par l'interface utilisateur, et
o une étape de réception (E9), en provenance dudit module de traitement, dudit premier jeu (JD1) de données chiffrées au moyen de ladite table de chiffrement (TC),
- une étape de réception (E12) d'un deuxième jeu (JD2) de données ayant été effectivement saisies au moyen de l'interface utilisateur et chiffrées au moyen de ladite table de chiffrement au cours de la phase de masquage (PH1),
- une étape de déchiffrement (E13) d'au moins un premier jeu (JD1) de données et du deuxième jeu (JD2) de données reçus, et
- une étape d'identification (E14) du deuxième jeu (JD2) de données parmi l'ensemble des jeux (JD1, JD2) de données ainsi déchiffrées à l'aide des premiers jeux (JD1) de données transmis à l'interface utilisateur.

2. Procédé de protection selon la revendication 1 dans lequel une nouvelle table de chiffrement est transmise audit module de traitement des données saisies préalablement à chaque phase de masquage.

3. Procédé de protection selon la revendication 1 dans lequel la phase de masquage est stoppée une fois le déchiffrement du deuxième jeu de données réalisé.

4. Procédé de protection selon la revendication 1 dans lequel le module de traitement détermine le contenu destiné à être affiché par l'interface utilisateur en vue de la saisie de données.

5. Procédé de protection selon l'une des revendications précédentes dans lequel module de traitement communique avec au moins un dispositif sécurisé au moyen des données du deuxième jeu de données.

6. Procédé de protection selon la revendication 5 dans lequel le dispositif sécurisé est une carte de paiement et les données du deuxième jeu de données sont un code PIN associé à ladite carte de paiement.

7. Procédé de transmission sécurisée de données saisies au moyen d'une interface utilisateur d'un terminal de communication à destination d'un dispositif de traitement sécurisé de données, le procédé étant mis en oeuvre par un module de traitement des données saisies compris dans le terminal de communication et comprenant :
- une étape de réception d'une table de chiffrement en provenance du dispositif de traitement sécurisé,
- une phase de réception, en provenance de l'interface utilisateur, d'un ensemble de jeux de données comprenant plusieurs premiers jeux (JD1) de données dont la saisie a été émulée par l'interface utilisateur et un deuxième jeu (JD2) de données effectivement saisies au moyen de l'interface utilisateur, le deuxième jeu (JD2) de données étant reçu au cours de la réception de la pluralité de premiers jeux (JD1) de données,
- une étape de chiffrement au moyen de ladite table de chiffrement de l'ensemble des jeux de données reçus,
- une étape de transmission de l'ensemble des jeux de données chiffrés à destination du dispositif de traitement sécurisé.

8. Procédé de transmission sécurisée selon la revendication 7 comprenant à réception d'un message de confirmation du déchiffrement du deuxième jeu de données en provenance du dispositif de traitement sécurisé, une étape d'établissement d'une communication avec un avec un serveur de traitement.

9. Dispositif de traitement sécurisé de données saisies au moyen d'une interface utilisateur (10) d'un terminal de communication (1) comprenant un module de traitement de données (11) saisies destiné à traiter les données saisies au moyen de l'interface utilisateur (10),
le dispositif de traitement comprenant au moins un processeur configuré pour :
- transmettre (E5), au travers d'une une connexion sécurisée (3) établie entre le dispositif de traitement sécurisé de données (2) et le terminal de communication (1), une table de chiffrement à destination dudit module de traitement des données saisies, ladite table de chiffrement étant destinée à être utilisée par ledit module de traitement de données (11) pour chiffrer des données saisies au moyen de l'interface utilisateur,
- répéter plusieurs fois (PH1) une
o transmission (E6), à destination de l'interface utilisateur, d'un premier jeu de données dont la saisie est destinée à être émulée par l'interface utilisateur, et
o réception (E9), en provenance dudit module de traitement, dudit premier jeu de données chiffrées au moyen de ladite table de chiffrement au cours d'une phase durant laquelle :
- recevoir (E12) un deuxième jeu de données ayant été effectivement saisies au moyen de l'interface utilisateur et chiffrées au moyen de ladite table de chiffrement au cours de ladite répétition,
- déchiffrer (E13) au moins un premier jeu de données et le deuxième jeu de données reçus,
- identifier (E14) le deuxième jeu de données parmi l'ensemble des jeux de données ainsi déchiffrés à l'aide des premiers jeux de données transmis à l'interface utilisateur.

10. Module de traitement de données saisies au moyen d'une interface utilisateur d'un terminal de communication, ledit module de traitement des données saisies étant compris dans le terminal de communication et comprenant des moyens pour :
- recevoir une table de chiffrement en provenance du dispositif de traitement sécurisé,
- recevoir, en provenance de l'interface utilisateur, un ensemble de jeux de données comprenant plusieurs premiers jeux de données dont la saisie a été émulée par l'interface utilisateur et un deuxième jeu de données effectivement saisies au moyen de l'interface utilisateur, le deuxième jeu de données étant reçu au cours de la réception de la pluralité de premiers jeux de données
- chiffrer au moyen de ladite table de chiffrement l'ensemble des jeux de données reçus,
- transmettre l'ensemble des jeux de données chiffrés à destination du dispositif de traitement sécurisé.

11. Terminal de communication comprenant :
- une interface utilisateur adaptée pour saisir des données, et
- un module de traitement de données selon la revendication 10.

12. Terminal de communication selon la revendication 11 comprenant en outre un dispositif de traitement sécurisé des données saisies au moyen de l'interface utilisateur du terminal de communication, le dispositif de traitement comprenant au moins un processeur configuré pour :
- transmettre la table de chiffrement à destination du module de traitement des données saisies,
- transmettre, à destination de l'interface utilisateur, lesdits premiers jeux de données,
- recevoir lesdits premiers jeux de données chiffrés au moyen de ladite table de chiffrement au cours d'une phase durant laquelle :
les données du deuxième jeu de données, effectivement saisies au moyen de l'interface utilisateur et chiffrées au moyen de ladite table de chiffrement, sont reçues par le dispositif de traitement sécurisé de données.

13. Terminal de communication selon la revendication 11 dans lequel l'interface utilisateur est constituée d'un écran tactile.

14. Produit programme d'ordinateur comprenant des instructions de code de programme pour la mise en oeuvre d'un procédé de protection de données selon l'une quelconque des revendications 1 à 6, lorsqu'il est exécuté par un processeur.

15. Produit programme d'ordinateur comprenant des instructions de code de programme pour la mise en oeuvre d'un procédé de transmission sécurisée de données selon l'une quelconque des revendications 7 à 8, lorsqu'il est exécuté par un processeur.

## Patentansprüche

1. Verfahren zum Schutz von Daten, die mittels einer Benutzeroberfläche (10) eines Kommunikationsendgeräts (1) eingegeben wurden, umfassend ein Modul für die Verarbeitung von eingegebenen Daten (11), das zur Verarbeitung der Daten bestimmt ist, die mittels der Benutzeroberfläche (10) eingegeben wurden,
wobei das Verfahren von einer Vorrichtung für die sichere Verarbeitung von Daten (2) durchgeführt wird und Folgendes umfasst:
- einen Schritt zum Übertragen (E5), über eine sichere Verbindung (3), die zwischen der Vorrichtung für die sichere Verarbeitung von Daten (2) und dem Kommunikationsendgerät (1) hergestellt ist, einer Verschlüsselungstabelle (TC) an das Modul für die Verarbeitung der eingegebenen Daten, wobei die Verschlüsselungstabelle zur Verwendung durch das Modul für die Verarbeitung der eingegebenen Daten bestimmt ist, um Daten zu verschlüsseln, die mittels der Benutzeroberfläche eingegeben wurden,
- eine Maskierungsphase (PH1), die mehrere Wiederholungen der folgenden Schritte umfasst:
∘ einen Schritt zum Übertragen (E6), an die Benutzeroberfläche, eines ersten Satzes (JD1) von Daten, deren Eingabe zur Emulierung durch die Benutzeroberfläche bestimmt ist, und
∘ einen Schritt zum Empfangen (E9), von dem Verarbeitungsmodul, des ersten Satzes (JD1) von Daten, die mittels der Verschlüsselungstabelle (TC) verschlüsselt wurden,
- einen Schritt zum Empfangen (E12) eines zweiten Satzes (JD2) von Daten, die effektiv mittels der Benutzeroberfläche eingegeben und mittels der Verschlüsselungstabelle im Laufe der Maskierungsphase (PH1) verschlüsselt worden sind,
- einen Schritt zum Entschlüsseln (E13) wenigstens eines empfangenen ersten Satzes (JD1) von Daten und des empfangenen zweiten Satzes (JD2) von Daten und
- einen Schritt zum Identifizieren (E14) des zweiten Satzes (JD2) von Daten aus der Gesamtheit der Sätze (JD1, JD2) von so entschlüsselten Daten mit Hilfe der ersten Sätze (JD1) von Daten, die an die Benutzeroberfläche übertragen wurden.

2. Schutzverfahren nach Anspruch 1, wobei eine neue Verschlüsselungstabelle an das Modul für die Verarbeitung der zuvor eingegebenen Daten in jeder Maskierungsphase übertragen wird.

3. Schutzverfahren nach Anspruch 1, wobei die Maskierungsphase gestoppt wird, sobald die Entschlüsselung des zweiten Satzes von Daten erfolgt ist.

4. Schutzverfahren nach Anspruch 1, wobei das Verarbeitungsmodul den Inhalt ermittelt, der zur Anzeige durch die Benutzeroberfläche bestimmt ist, zwecks der Eingabe von Daten.

5. Schutzverfahren nach einem der vorhergehenden Ansprüche, wobei das Verarbeitungsmodul mit wenigstens einer sicheren Vorrichtung mittels der Daten des zweiten Satzes von Daten kommuniziert.

6. Schutzverfahren nach Anspruch 5, wobei die sichere Vorrichtung eine Bezahlkarte ist und die Daten des zweiten Satzes von Daten ein PIN-Code sind, der der Bezahlkarte zugeordnet ist.

7. Verfahren zum sicheren Übertragen von Daten, die mittels einer Benutzeroberfläche eines Kommunikationsendgeräts eingegeben wurden, an eine Vorrichtung für die sichere Verarbeitung von Daten, wobei das Verfahren von einem Modul für die Verarbeitung der eingegebenen Daten durchgeführt wird, das in dem Kommunikationsendgerät enthalten ist, und Folgendes umfasst:
- einen Schritt zum Empfangen einer Verschlüsselungstabelle von einer Vorrichtung für die sichere Verarbeitung,
- eine Phase zum Empfangen, von der Benutzeroberfläche, einer Gesamtheit von Datensätzen, die mehrere erste Sätze (JD1) von Daten, deren Eingabe durch die Benutzeroberfläche emuliert worden ist, und einen zweiten Satz (JD2) von Daten, die mittels der Benutzeroberfläche effektiv eingegeben wurden, umfassen, wobei der zweite Satz (JD2) von Daten im Laufe des Empfangs der Mehrzahl von ersten Sätzen (JD1) von Daten empfangen wird,
- einen Schritt zum Verschlüsseln mittels der Verschlüsselungstabelle der Gesamtheit der empfangenen Sätze von Daten,
- einen Schritt zum Übertragen der Gesamtheit der verschlüsselten Sätze von Daten an die Vorrichtung für die sichere Verarbeitung.

8. Verfahren zum sicheren Übertragen nach Anspruch 7, umfassend, bei Empfang einer Nachricht zur Bestätigung der Entschlüsselung des zweiten Satzes von Daten von der Vorrichtung für die sichere Verarbeitung, einen Schritt zum Herstellen einer Kommunikation mit einem Verarbeitungsserver.

9. Vorrichtung für die sichere Verarbeitung von Daten, die mittels einer Benutzeroberfläche (10) eines Kommunikationsendgeräts (1) eingegeben wurden, umfassend ein Modul für die Verarbeitung von eingegebenen Daten (11), das zur Verarbeitung der Daten bestimmt ist, die mittels der Benutzeroberfläche (10) eingegeben wurden,
wobei die Vorrichtung für die Verarbeitung wenigstens einen Prozessor umfasst, der konfiguriert ist zum:
- Übertragen (E5), über eine sichere Verbindung (3), die zwischen der Vorrichtung für die sichere Verarbeitung von Daten (2) und dem Kommunikationsendgerät (1) hergestellt ist, einer Verschlüsselungstabelle an das Modul für die Verarbeitung der eingegebenen Daten, wobei die Verschlüsselungstabelle zur Verwendung durch das Modul für die Verarbeitung von Daten (11) bestimmt ist, um Daten zu verschlüsseln, die mittels der Benutzeroberfläche eingegeben wurden,
- mehrmaligen Wiederholen (PH1) von
∘ Übertragen (E6), an die Benutzeroberfläche, eines ersten Satzes von Daten, deren Eingabe zur Emulierung durch die Benutzeroberfläche bestimmt ist, und
∘ Empfangen (E9), von dem Verarbeitungsmodul, des ersten Satzes von Daten, die mittels der Verschlüsselungstabelle im Laufe einer Phase verschlüsselt wurden, in deren Verlauf:
- Empfangen (E12) eines zweiten Satzes von Daten, die effektiv mittels der Benutzeroberfläche eingegeben und mittels der Verschlüsselungstabelle im Laufe der Wiederholung verschlüsselt worden sind,
- Entschlüsseln (E13) wenigstens eines empfangenen ersten Satzes von Daten und des empfangenen zweiten Satzes von Daten,
- Identifizieren (E14) des zweiten Satzes von Daten aus der Gesamtheit der so entschlüsselten Sätze von Daten mit Hilfe der ersten Sätze von Daten, die an die Benutzeroberfläche übertragen wurden.

10. Modul für die Verarbeitung von Daten, die mittels einer Benutzeroberfläche eines Kommunikationsendgeräts eingegeben wurden, wobei das Modul für die Verarbeitung der eingegebenen Daten in dem Kommunikationsendgerät enthalten ist und Mittel enthält zum:
- Empfangen einer Verschlüsselungstabelle von einer Vorrichtung für die sichere Verarbeitung,
- Empfangen, von der Benutzeroberfläche, einer Gesamtheit von Datensätzen, die mehrere erste Sätze von Daten, deren Eingabe durch die Benutzeroberfläche emuliert worden ist, und einen zweiten Satz von Daten, die mittels der Benutzeroberfläche effektiv eingegeben wurden, umfassen, wobei der zweite Satz von Daten im Laufe des Empfangs der Mehrzahl von ersten Sätzen von Daten empfangen wird,
- Verschlüsseln mittels der Verschlüsselungstabelle der Gesamtheit der empfangenen Sätze von Daten,
- Übertragen der Gesamtheit der verschlüsselten Datensätze an die Vorrichtung für die sichere Verarbeitung.

11. Kommunikationsendgerät, umfassend:
eine Benutzeroberfläche, die für die Eingabe von Daten eingerichtet ist, und ein Modul für die Verarbeitung von Daten nach Anspruch 10.

12. Kommunikationsendgerät nach Anspruch 11, ferner umfassend eine Vorrichtung für die sichere Verarbeitung der Daten, die mittels der Benutzeroberfläche des Kommunikationsendgeräts, eingegeben wurden, wobei die Verarbeitungsvorrichtung wenigstens einen Prozessor umfasst, der konfiguriert ist zum:
- Übertragen der Verschlüsselungstabelle an das Modul für die Verarbeitung der eingegebenen Daten,
- Übertragen, an die Benutzeroberfläche, der ersten Sätze von Daten,
- Empfangen der ersten Sätze von Daten, die mittels der Verschlüsselungstabelle im Laufe einer Phase verschlüsselt wurden, in deren Verlauf:
die Daten des zweiten Satzes von Daten, die effektiv mittels der Benutzeroberfläche eingegeben und mittels der Verschlüsselungstabelle verschlüsselt wurden, von der Vorrichtung für die sichere Verarbeitung von Daten empfangen werden.

13. Kommunikationsendgerät nach Anspruch 11, wobei die Benutzeroberfläche von einem berührungsempfindlichen Bildschirm gebildet ist.

14. Computerprogrammprodukt, umfassend Programmcode-Anweisungen für die Durchführung eines Verfahrens zum Schutz von Daten nach einem der Ansprüche 1 bis 6, wenn es von einem Prozessor ausgeführt wird.

15. Computerprogrammprodukt, umfassend Programmcode-Anweisungen für die Durchführung eines Verfahrens zum sicheren Übertragen von Daten nach einem der Ansprüche 7 bis 8, wenn es von einem Prozessor ausgeführt wird.

## Claims

1. Method for protecting data entered by means of a user interface (10) of a communication terminal (1) comprising a module (11) for processing data entered that is intended to process the data entered by means of the user interface (10),
the method being implemented by a secure data processing device (2) and comprising:
- a step (E5) of transmitting, via a secure connection (3) set up between the secure data processing device (2) and the communication terminal (1), an encryption table (TC) to said module for processing the data entered, said encryption table being intended to be used by said module for processing the data entered to encrypt data entered by means of the user interface,
- a masking phase (PH1) comprising several repetitions of the following steps:
∘ a step (E6) of transmitting, to the user interface, a first set (JD1) of data whose entry is intended to be emulated by the user interface, and
∘ a step (E9) of receiving, from said processing module, said first set (JD1) of data encrypted by means of said encryption table (TC),
- a step (E12) of receiving a second set (JD2) of data having been actually entered by means of the user interface and encrypted by means of said encryption table during the masking phase (PH1),
- a step (E13) of decrypting at least a first set (JD1) of data and the second set (JD2) of data received, and
- a step (E14) of identifying the second set (JD2) of data from the set of sets (JD1, JD2) of data thus decrypted using the first sets (JD1) of data transmitted to the user interface.

2. Protection method according to claim 1, wherein a new encryption table is transmitted to said module for processing the data previously entered during each masking phase.

3. Protection method according to claim 1, wherein the masking phase is stopped when the second set of data has been decrypted.

4. Protection method according to claim 1, wherein the processing module determines the content intended to be displayed by the user interface in order to enter data.

5. Protection method according to one of the preceding claims, wherein the processing module communicates with at least one secure device by means of the data of the second set of data.

6. Protection method according to claim 5, wherein the secure device is a payment card and the data of the second set of data are a PIN code associated with said payment card.

7. Method for secure transmission of data entered by means of a user interface of a communication terminal to a secure data processing device, the method being implemented by a module for processing the data entered that is included in the communication terminal and comprising:
- a step of receiving an encryption table from the secure processing device,
- a phase of receiving, from the user interface, a set of data sets comprising several first sets (JD1) of data whose entry was emulated by the user interface and a second set (JD2) of data actually entered by means of the user interface, the second set (JD2) of data being received during reception of the plurality of first sets (JD1) of data,
- a step of encrypting, using said encryption table, the set of data sets received,
- a step of transmitting the set of encrypted data sets to the secure processing device.

8. Secure transmission method according to claim 7, comprising upon reception of a message confirming the decryption of the second set of data from the secure processing device, a step of setting up a communication with a processing server.

9. Secure device for processing data entered by means of a user interface (10) of a communication terminal (1) comprising a module (11) for processing data entered that is intended to process the data entered by means of the user interface (10),
the processing device comprising at least one processor configured to:
- transmit (E5), via a secure connection (3) set up between the secure data processing device (2) and the communication terminal (1), an encryption table to said module for processing the data entered, said encryption table being intended to be used by said data processing module (11) to encrypt data entered by means of the user interface,
- repeat several times (PH1)
∘ a step (E6) of transmitting, to the user interface, a first set of data whose entry is intended to be emulated by the user interface, and
∘ a step (E9) of receiving, from said processing module, said first set of data encrypted by means of said encryption table in a phase of:
- receiving (E12) a second set of data having been actually entered by means of the user interface and encrypted by means of said encryption table during said repetition,
- decrypting (E13) at least a first set of data and the second set of data received,
- identifying (E14) the second set of data from the set of data sets thus decrypted using the first sets of data transmitted to the user interface.

10. Module for processing data entered by means of a user interface of a communication terminal, said module for processing data entered being included in the communication terminal and comprising means for:
- receiving an encryption table from the secure processing device,
- receiving, from the user interface, a set of data sets comprising several first sets of data whose entry was emulated by the user interface and a second set of data actually entered by means of the user interface, the second set of data being received during reception of the plurality of first sets of data,
- encrypting by means of said encryption table the set of data sets received;
- transmitting the set of encrypted data sets to the secure processing device.

11. Communication terminal comprising:
- a user interface adapted to enter data, and
- a data processing module according to claim 10.

12. Communication terminal according to claim 11, further comprising a secure device for processing the data entered by means of the user interface of the communication terminal, the processing device comprising at least one processor configured to:
- transmit the encryption table to the module for processing the data entered,
- transmit said first data sets to the user interface,
- receive said first data sets encrypted by means of said encryption table in a phase during which:
the data of the second data set, actually entered by means of the user interface and encrypted by means of said encryption table, are received by the secure data processing device.

13. Communication terminal according to claim 11, wherein the user interface consists of a touchscreen.

14. Computer program product comprising program code instructions for the implementation of a data protection method according to any one of claims 1 to 6, when it is executed by a processor.

15. Computer program product comprising program code instructions for the implementation of a secure data transmission method according to claim 7 or 8, when it is executed by a processor.
